# EUROPÄISCHE PATENTSCHRIFT

(11) **EP 3 899 331 B1**
(45) Veröffentlichungstag und Bekanntmachung des Hinweises auf die Patenterteilung: **24.05.2023**
(21) Anmeldenummer: 19839316.7
(22) Anmeldetag: 02.12.2019
(51) Int. Cl.: F16K 15/14

(54) **DICHTMEMBRAN UND RÜCKSCHLAGVENTIL MIT DICHTMEMBRAN FÜR FLUIDTECHNISCHE ANWENDUNGEN**
SEALING DIAPHRAGM AND CHECK VALVE HAVING A SEALING DIAPHRAGM FOR FLUID TECHNOLOGY APPLICATIONS
MEMBRANE D'ÉTANCHÉITÉ ET SOUPAPE DE RETENUE COMPRENANT UNE MEMBRANE D'ÉTANCHÉITÉ POUR LES APPLICATIONS FLUIDIQUES

(30) Priorität: 21.12.2018 DE 102018009963
(43) Veröffentlichungstag der Anmeldung: 27.10.2021
(73) Patentinhaber: Aventics GmbH, 30880 Laatzen (DE)
(72) Erfinder: KOCH, Jens, 30451 Hannover (DE); AMMANN, Carsten, 31303 Burgdorf (DE); STOLPER, Martin, 26160 Bad Zwischenahn (DE)
(74) Vertreter: Spahn, Tobias
(86) Internationale Anmeldenummer: PCT/DE2019/000309
(87) Internationale Veröffentlichungsnummer: WO 2020/125831

(56) Entgegenhaltungen:
- WO-A1-2018/199238
- US-A1- 2007 163 656
- US-A1- 2013 186 481

## Beschreibung

### Technisches Gebiet

Die Erfindung betrifft eine Dichtmembran und ein Rückschlagventil mit Dichtmembran für fluidtechnische Anwendungen.

### Stand der Technik

Für einfache Steuerungsaufgaben ist im Stand der Fluidtechnik die Verwendung von Rückschlagventilen bekannt. Ein Rückschlagventil dient bei fluidtechnischen Anwendungen generell zur Richtungsbestimmung, indem es die Strömung eines Fluids (Flüssigkeit, Gas) in nur einer Richtung zulässt. Hierbei wird in der Regel ein Schließelement in einer Durchlassrichtung vom Druck des strömenden Fluids freigegeben, während es in Gegenrichtung selbsttätig, bspw. bedingt durch die Rückstellkraft einer Feder, die Schwerkraft oder einen Fluiddruck auf der Abflussseite, sperrt. Es ist ferner bekannt, hierbei als Schließelement ein dichtendes Membranmittel aus einem elastisch verformbaren Material, etwa einem Elastomer, zu verwenden. Das Membranmittel kann hierbei beispielsweise einen Sperrlappen bilden, der in einem Strömungsweg mit oder ohne Vorspannung formelastisch an einer Dichtfläche anliegt oder in einen Dichtsitz gedrückt ist. Steht in der Durchlassrichtung ein ausreichender Fluiddruck an, der die Rückstellkraft des elastisch verformbaren Sperrlappens überwinden kann, wird der Sperrlappen vom Dichtsitz abgehoben und gibt den Strömungsweg frei. Bei der Wegnahme des Fluiddrucks federt der Sperrlappen formelastisch in seine Ausgangsposition zurück. In Gegenrichtung sperrt der Sperrlappen den Strömungsweg formschlüssig durch seine dichtende Anlage an die korrespondierende Dichtfläche oder den Dichtsitz. Beispielsweise im Bereich der Pneumatik ist die Verwendung derartiger Rückschlagventile mit Dichtmembran zum Schutz von Auslassöffnungen von Ventilen oder Zylindern bekannt, um je nach Einsatzumgebung das Eindringen von Staub, Flüssigkeiten oder anderen Stoffen zu verhindern. Technisch Nachteilhaft ist bei der Verwendung von Dichtmembranen für fluidtechnische Anwendung generell, dass diese bei bestimmten Fluiddrücken, Durchflussraten oder Betätigungsfrequenzen aufgrund ihrer Formelastizität dazu neigen, zu schwingen, oszillieren oder zu flattern. Insbesondere bei pneumatischen Anwendungen kann dies zu unerwünscht Störgeräuschen führen, etwa einem hohen Pfeifgeräusch.

Aus der EP 0 624 744 A1 ist ein schwingungsgedämpftes lippenförmiges Rückschlagventil für fluidtechnische Anwendungen bekannt. Zur Verhinderung unerwünschter Schwingungen und Pfeifgeräusche wird vorgeschlagen, dass der aus einem elastomeren Material gebildete Ventilkörper Schwingungsdämpfer umfasst, welche im Strömungsweg mit einer natürlichen Eigenfrequenz frei mitschwingen, die einer Schwingungsbewegung des Ventilkörpers dämpfend, zum Beispiel durch eine gegenphasige Schwingung, entgegenwirkt. Die von der EP 0 624 744 A1 vorgeschlagene Lösung ist konstruktiv relativ aufwändig, da die Ausgestaltung der Schwingungsdämpfer auf die jeweilige Beschaffenheit und Dimensionierung des Ventilkörpers sowie den jeweiligen Einsatzzweck speziell berechnet und abgestimmt sein muss, um die gewünschte Funktion erfüllen zu können. Ferner erfordert die technische Lösung das Vorhandensein bestimmter räumlicher Gegebenheiten, damit die zusätzlichen Schwingungsdämpfer im Strömungsweg frei schwingend positionierbar sind.

Aus der DE 10 2009 018 930 A1 ist ein Rückschlagventil mit einem flächigen Sperrlappen aus einem elastisch verformbaren Material bekannt, bei welchem auf der dem Ventilsitz angewandten Seite des Sperrlappens ein Anschlagelement angeordnet ist, gegen das der Sperrlappen anschlagen kann, um das Maß des Anhebens des Sperrlappens von dem Ventilsitz zu begrenzen. Durch die begrenzte Öffnungsstellung kann gewährleistet werden, dass das Fluid den Sperrlappen in seiner Öffnungsstellung strömungstechnisch günstig schräg anströmt, wodurch Verwirbelungen und strömungstechnisch ungünstige Phänomene vermieden werden können. Die von der DE 10 2009 018 930 A1 vorgeschlagene Lösung ist insoweit nachteilhaft, als der mögliche Durchflussquerschnitt aufgrund der Anschlagsbegrenzung prinzipienbedingt verringert wird. Eine Stabilisierung des Sperrlappens wird zudem nur in der vollständigen Öffnungsstellung bei einem bestimmten Mindestdruck erreicht. Schließlich muss das Anschlagelement nach der von der DE 10 2009 018 930 A1 offenbarten Lösung entweder als gesondertes, zusätzlich Bauteil vorgesehen sein, oder das Ventil ist nach einer alternativen Ausführung als konstruktiv ebenfalls aufwendiges spezielles Doppel-Rückschlagventil einteilig mit zwei Sperrlappen und einem gemeinsamen zwischen diesen angeordneten Sperrelement ausgebildet.

Die Dokumente US 2013/186481 A1, US 2007/163656 A1, DE 10 2015 201 528 A1, DE 11 2018 001 265 T5, JP 2016- 50 613 A, DE 72 19 252 U, DE 10 2008 035 372 A1, DE 102 27 193 A1 und DE 11 73 298 A offenbaren verschiedene Dichtkörper. WO 2018/199238 A1 offenbart eine Dichtmembran nach dem Oberbegriff des Anspruchs 1.

Keine dieser Dokumente offenbart einen Dichtkörper, der einteilig ausgeführt und sowohl kostengünstig als auch konstruktiv einfach herstellbar ist und mit dem im Betrieb unerwünschte Störgeräusche vermieden werden.

### Offenbarung der Erfindung

Der Erfindung liegt die Aufgabe zu Grunde, die dargestellten Nachteile zu vermeiden. Insbesondere soll eine kostengünstig und konstruktiv einfach herstellbare Dichtmembran für fluidtechnische Anwendungen bereitgestellt werden, die als Schließmittel für ein Rückschlagventil einsetzbar ist und mit der im Betrieb unerwünschte Störgeräusche vermieden werden.

Die Aufgabe wird erfindungsgemäß gelöst durch eine Dichtmembran nach Anspruch 1 und ein Rückschlagventil mit einer Dichtmembran nach Anspruch 5. Vorteilhafte Weiterbildungen der Erfindung sind in den Unteransprüchen angegeben.

Den Kern der Erfindung bildet eine Dichtmembran mit einem flächigen, biegeelastischen Dichtabschnitt, der mit einem Fluiddruck bieg- oder wölbbar ist, bei der auf oder benachbart zu der Fläche des Dichtabschnitts in einem Abstand zu einem Rand des Dichtabschnitts mindestens ein formelastischer Reibzahn derart ausgebildet oder angeordnet ist, dass er mit dem Dichtabschnitt einen Winkel zwischen 30° bis 150° bildet und sich gemeinsam mit der Biegungs- oder Wölbungsbewegung des flächigen Dichtabschnitts neigt, wobei der Reibzahn an einer in Neigungsrichtung orientierten Flanke eine Kontaktfläche aufweist. Der flächige Dichtabschnitt der Dichtmembran dient als Schließelement, indem er in seiner Ruhestellung mit oder ohne Vorspannung durch Anlage in einen Dichtsitz mit einer korrespondierenden Dichtfläche oder einen Dichtsitz bringbar ist. Mit einem ausreichenden, gegen die Anlage des Dichtabschnitts an die korrespondierenden Dichtfläche oder den Dichtsitz gerichteten Fluiddruck ist die formelastische Rückstellkraft des Dichtabschnitts überwindbar, wodurch sich der Dichtabschnitt biegt oder wölbt und ein Durchflussquerschnitt freigebbar ist. Mit der Biegungs- oder Wölbungsbewegung des flächigen Dichtabschnitts neigt sich gleichzeitig der formelastische Reibzahn, wodurch die an einer in der Neigungsrichtung orientierten Flanke befindliche Kontaktfläche des Reibzahns mit einem korrespondierenden Anschlagsfläche der Umgebung in einen Kontakt bringbar ist. Hierbei übt die Kontaktfläche des Reibzahns einen Reibschluss auf die korrespondierenden Anschlagsfläche aus, wodurch die Lage des Dichtabschnitts aufgrund der körperlichen Verbindung von Dichtabschnitt und Reibzahn in seiner Öffnungsstellung stabilisiert und ein unerwünschtes Schwingen, Oszillieren oder Flattern des Dichtabschnitts in der Öffnungsstellung verhindert oder zumindest stark gedämpft wird. Hierdurch werden unerwünschte Störgeräusche vermeiden. Die Breite und Länge des Reibzahns, der Winkel, den der Reibzahn mit dem Dichtabschnitt bildet, sowie der Abstand des Reibzahns vom Rand des Dichtabschnitts werden in Abhängigkeit von den der gegeben Geometrie der Einsatzumgebung, des Fluiddrucks und der Formelastizität des verwendeten Materials derart gewählt, dass in der Öffnungsstellung des Dichtabschnitts ein ausreichender Durchfluss gegeben und gleichzeitig eine ausreichende Stabilisierung der Lage des Dichtabschnitts gegeben ist. Erfindungsgemäß sind mehrere Reibzähne in einem Abstand zum Rand des Dichtabschnitt beispielsweise senkrecht zu diesem ausgebildet oder angeordnet. Mit der Biegung oder Wölbung des Dichtabschnitts bei Belastung mit einem Fluiddruck neigt sich gleichzeitig jeder Reibzahn und greift mit seiner Kontaktfläche ab einem bestimmten Öffnungswinkel des Dichtabschnitts beispielsweise an die Innenseite eines Fluidkanals an, wodurch je nach Länge des Reibzahns ab einem bestimmten Biegungs- oder Wölbungswinkel ein den Dichtabschnitt stabilisierender Reibschluss zu der Innenseite herstellbar ist. Aufgrund der Formelastizität des Reibzahns ist hierbei eine dynamische Stabilisierung des Dichtabschnitts über einen größeren Biege- oder Wölbungsbereich hinweg ermöglicht. Die erfindungsgemäße Dichtmembran besitzt den weiteren Vorteil, dass sie insgesamt sowohl kostengünstig, als auch konstruktiv einfach einteilig herstellbar ist. Insbesondere ist die Dichtmembran einfach mit einem oder mehreren Reibzähnen als Elastomer in einem einzelnen urformenden oder umformenden Fertigungsschritt herstellbar.

Bei einer erfindungsgemäßen Dichtmembran mit einem Randbereich und einen Zentralbereich, ist der Randbereich durchgängig als Dichtabschnitt ausgebildet. Hierdurch ist die Dichtmembran im Zentralbereich fixierbar, während der im Randbereich ausgebildete Dichtabschnitt die Ventilfunktion übernimmt.

Ist der Randbereich der Dichtmembran durchgängig als Dichtabschnitt ausgebildet, sind mehrere Reibzähne jeweils im gleichen Abstand zum Rand des Dichtabschnitts über den gesamten Dichtabschnitt hinweg und jeweils in einem Abstand zueinander ausgebildet oder angeordnet. Hierdurch ist ein gleichmäßiges Biegungs- oder Wölbungsmoment des umlaufenden Dichtabschnitts über seine gesamte Fläche hinweg und damit eine gleichmäßige Dichtwirkung gewährleistet.

Indem die Reibzähne hierbei jeweils in einem gleichen Abstand zueinander ausgebildet oder angeordnet sind, ist eine gleichmäßige Stabilisierung des Dichtabschnitts über seine gesamte Fläche hinweg erreicht. Indem die Reibzähne in einem variierenden Abstand zueinander ausgebildet oder angeordnet sind, ist eine weitere Einflussnahme auf das Schwingungsverhalten der Dichtmembran gegeben. Über eine geringfügige Variation des Abstandes der Reibzähne zueinander wird ein zusätzliches Einflussnahmemoment auf das Schwingungsverhalten der Dichtmembran geschaffen, wodurch der Aufbau unerwünschter periodischer Schwingungsvorgänge zusätzlich vermieden werden kann.

In einer weiteren Ausgestaltung der Erfindung weist eine Dichtmembran mit einem durchgängigen umlaufenden Dichtabschnitt im Randbereich eine kreisrunde Grundfläche auf und die Reibzähne sind ringförmig ausgebildet oder angeordnet. Hierdurch lässt sich die Dichtmembran konstruktiv einfach zum Schutz typischer Auslassöffnungen, beispielsweise von pneumatischen Ventilen oder Zylindern, verwenden, die in der Regel als Ausgänge von Fluidkanälen ebenfalls einen kreisrunden Querschnitt aufweisen.

In einer weiteren Ausgestaltung der vorstehend beschriebenen Ausführungsform der Erfindung ist im Zentralbereich mindestens eine Durchflussöffnung ausgebildet und um diese verlaufend eine Einspann- oder Flanschfläche oder ein Hohlansatz gebildet. Hierdurch ist die Dichtmembran einfach im Zentralbereich über einem Fluidausgang platzierbar und beispielsweise mit Abdeckkappe von außen fixierbar. Es kann eine Durchströmung durch die mindestens eine Durchflussöffnung im Zentralbereich erfolgen, welche durch die Abdeckkappe auf den die Ventilfunktion ausübenden Randbereich der Dichtmembran umlenkbar ist.

Ein erfindungsgemäßes Rückschlagventil für fluidtechnische Auslassöffnungen umfasst einen Gehäuseteil mit einem Fluidauslass, wobei im Strömungsweg der Auslassöffnung eine Dichtmembran nach einer der vorstehend beschriebenen Ausführungsformen angeordnet ist, welche mit einem Dichtabschnitt entgegen der Strömungsrichtung an einer Dichtfläche eines Dichtsitzes anliegt und mit einem Fluiddruck in Strömungsrichtung bieg- oder wölbbar ist, wobei sich die Kontaktfläche des mindestens einen Reibzahns gleichzeitig an eine mit ihr korrespondierende Anlagefläche anlegt.

In einer konstruktiv einfach herstellbaren weiteren Ausgestaltung der vorstehend beschriebenen Ausführungsform des Rückschlagventils ist dieses mit einer Dichtmembran mit einem Randbereich und einem Zentralbereich und einer kreisrunden Grundfläche ausgebildet, wobei der Randbereich durchgängig als Dichtabschnitt ausgebildet ist und mehrere Reibzähne jeweils im gleichen Abstand zum Rand des Dichtabschnitts über den gesamten Dichtabschnitt hinweg und jeweils in einem Abstand zueinander, insgesamt ringförmig auf der Fläche des Dichtabschnitts ausgebildet oder angeordnet sind. Die Dichtmembran ist ferner gleichzeitig mit einer zentralen Durchflussöffnung ausgebildet, um die herum ein Hohlansatz gebildet ist. Der Fluidauslass ist mit einem korrespondierenden Hohlansatz ausgebildet und die Dichtmembran auf diesen aufsteckbar oder in diesen einsteckbar. Auf der dem Fluidauslass abgewandten Seite der Dichtmembran ist eine kreisrunde, im Querschnitt hutförmige Abdeckkappe fixierbar, wobei eine umlaufende Flanke des Kopfteils der Abdeckkappe die ringförmig ausgebildeten oder angeordneten Reibzähne umfangsseitig umgreift und ein umlaufender Innenkrempenabschnitt der Abdeckkappe einen Dichtsitz mit einer Dichtfläche bildet, indem er gegenüber der Ebene des Dichtabschnitts in Richtung des Gehäuses geneigt ausgebildet ist, so dass der randseitige Dichtabschnitt in einer leichten Biegungs- oder Wölbungsstellung unter Vorspannung am Innenkrempenabschnitt bündig anliegt, wobei die Abdeckkappe einen weiteren, den Innenkrempenabschnitt umlaufenden Außenkrempenabschnitt bildet, der aus einem Zahnprofil gebildet oder als durchgängiger Bund mit Durchgangsöffnungen ausgestaltet ist und mit dem die Abdeckkappe am oder im Gehäuse fixierbar ist, wobei unterhalb des randseitigen Dichtabschnitts ein Hohlraum gebildet ist, in den dieser unter Fluiddruck in einer Biegungs- oder Wölbungsbewegung eingreifen kann, wobei sich die Reibzähne neigen und mit ihrer Kontaktfläche an die die Anlagefläche bildende Innenseite der umlaufenden Flanke des Kopfteils der Abdeckkappe anlegen. Bei der Beaufschlagung des Fluidauslasses wird die zentrale Durchflussöffnung der Dichtmembran durchströmt und die Fluidströmung auf der dem Fluidauslass abgewandten Seite der Dichtmembran durch die Abdeckkappe auf den Randbereich der Dichtmembran umgelenkt, der durchgängig als Dichtabschnitt ausgebildet ist. Bei Anliegen eines ausreichenden Fluiddrucks wird die formelastische Rückstellkraft des Dichtabschnitts überwunden, wodurch sich der der Dichtabschnitt von der den Dichtsitz mit einer Dichtfläche bildenden Innenkrempenabschnitt in einer Biegungs- oder Wölbungsbewegung abhebt, wobei er in den Hohlraum eingreift und einen Durchflussquerschnitt für die Fluidströmung freigibt. Die Fluidströmung kann durch den freigegeben Durchflussquerschnitt, den Hohlraum und die durch ein Zahnprofil oder als Durchgangsöffnungen eines Bundes gebildeten Öffnungen des Außenkrempenabschnitts in die Atmosphäre entweichen. Mit der Biegung oder Wölbung des Dichtabschnitts neigen sich gleichzeitig die Reibzähne und legen sich mit ihren jeweils in die Neigungsrichtung orientierten Kontaktflächen gleichzeitig an die die Anlagefläche bildende Innenseite der umlaufenden Flanke des Kopfteils der Abdeckkappe an und üben einen Reibschluss zu dieser aus, wodurch die Lage des Dichtabschnitts aufgrund der körperlichen Verbindung von Dichtabschnitt und Reibzahn in seiner Öffnungsstellung stabilisiert und ein unerwünschtes Schwingen, Oszillieren oder Flattern des Dichtabschnitts in der Öffnungsstellung verhindert oder zumindest so stark gedämpft wird, dass keine unerwünschten Störgeräusche emittiert werden.

In einer weiteren Ausgestaltung der vorstehend beschriebenen Ausführungsform des Rückschlagventils weist die Dichtmembran im Zentralbereich mehrere ringförmig um den Hohlansatz herum ausgebildete oder angeordnete Stabilisierungszähne auf. Diese dienen der zusätzlichen Stabilisierung der Dichtmembran im Zentralbereich, indem sie eine etwaige Hubbewegung gegenüber dem Dach des Kopfteils der Abdeckkappe unterbinden oder begrenzen. Die Länge der Stabilisierungszähnen ist hierzu vorzugsweise derart gewählt, dass ein Formschluss zum Dach herstellbar ist. Eine Fluidströmung ist hierbei durch die Zwischenräume der Stabilisierungszähne hindurch ermöglicht.

Weitere Vorteile der Erfindung sind nachstehend gemeinsam mit der Beschreibung bevorzugter Ausführungsbeispiele der Erfindung anhand der Figuren näher dargestellt. Es zeigen:
- Fig. 1: eine perspektivische Ansicht einer Dichtmembran;
- Fig. 2: eine Schnittdarstellung eines Rückschlagventils mit der Dichtmembran gemäß Fig. 1 in Ruhestellung;
- Fig. 3: eine Schnittdarstellung des Rückschlagventils gemäß Fig. 2 in Beaufschlagungsstellung mit schematischer Darstellung des Strömungswegs der Fluidströmung.
- Fig. 4: eine Schnittdarstellung des Rückschlagventils gemäß Fig. 2 in Beaufschlagungsstellung mit schematischer Darstellung der Wölbung des Dichtabschnitts;

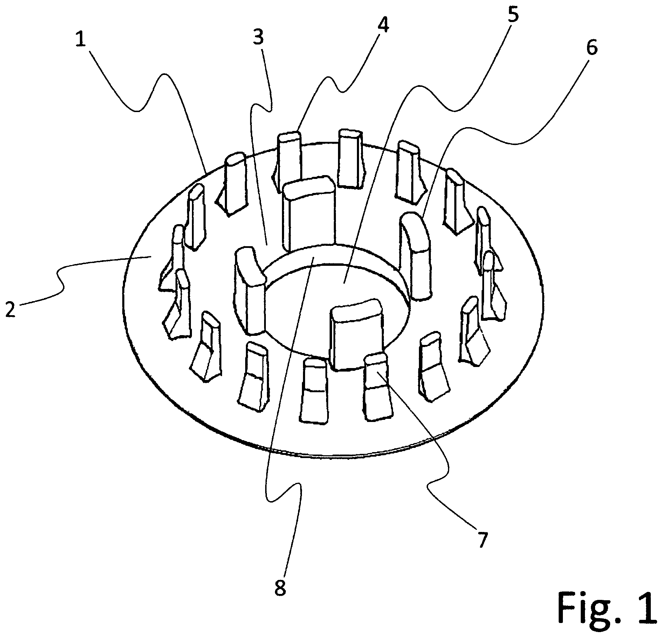

Fig. 1 zeigt die Dichtmembran 1 in einer perspektivischen Darstellung. Die Dichtmembran 1 ist aus einem formelastischen Elastomer gebildet und besitzt eine kreisrunde Grundfläche mit einem äußeren umlaufenden Randbereich 2 und einem inneren Zentralbereich 3. Der Randbereich 2 bildet einen durchgängigen Dichtabschnitt. Unmittelbar benachbart zu der Fläche des durch den Randbereich 2 gebildeten Dichtabschnitts sind senkrecht zur Grundfläche der Dichtmembran 1 (und damit gleichzeitig senkrecht zur Ebene des durch den Randbereich 2 gebildeten Dichtabschnitts) mehrere Reibzähne 4 ringförmig angeordnet, von den in Fig. 1 der besseren Übersicht halber lediglich der Reibzahn 4 exemplarisch beziffert ist. Die Reibzähne 4 sind hierbei jeweils ein einem gleichen Abstand zum äußeren Rand des den Dichtabschnitt bildenden Randbereichs 2 sowie in einem gleichen Abstand zueinander angeordnet. Alternativ können die Reibzähne 4 - bei jeweils gleichem Abstand zum äußeren Rand - auch in einem geringfügig variierenden Abstand zueinander angeordnet werden (in Fig. 1 nicht dargestellt), wodurch erforderlichenfalls ein zusätzliches Einflussnahmemoment auf das Schwingungsverhalten der Dichtmembran 1 besteht. Im Zentralbereich 3 ist eine zentrale Durchflussöffnung 5 gebildet. Um die Durchflussöffnung 5 herum sind ringförmig mehrere Stabilisierungszähne angeordnet, von denen in Fig. 1 übersichtshalber lediglich der Stabilisierungszahn 6 exemplarisch beziffert ist. Die Reibzähne 4 weisen an ihrer zum äußeren Rand des den Dichtabschnitt bildenden Randbereichs 2 orientierten Flanke jeweils eine Kontaktfläche 7 auf, von denen in Fig. 1 übersichtshalber lediglich die Kontaktfläche 7 exemplarisch beziffert ist. Um die zentrale Durchflussöffnung 5 verlaufend ist der Hohlansatz 8 ausgebildet.

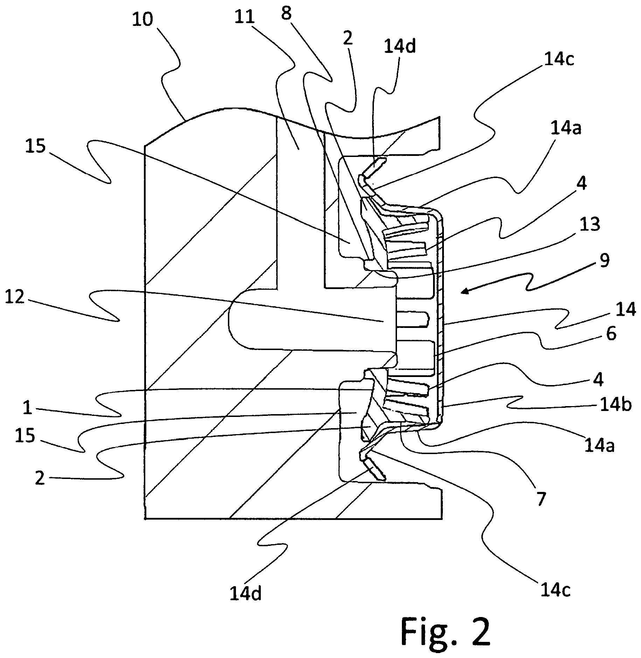

Die Fig. 2 bis Fig. 4 zeigen das Rückschlagventil 9 mit der Dichtmembran 1 gemäß Fig. 1 in Einbaulage. In dem Gehäuseteil 10 eines pneumatischen Ventilgehäuses ist der Fluidkanal 11 gebildet, der mit einer zylindrischen Öffnung als Fluidauslass 12 endet. Der Fluidauslass 12 ist an seiner Außenseite mit einem zum Hohlansatz 8 der Dichtmembran 1 korrespondierenden Hohlansatz 13 ausgebildet. Die Dichtmembran 1 ist mit dem Hohlansatz 8 auf den Hohlansatz 13 aufgesteckt. Auf der dem Fluidauslass 12 abgewandten Seite der Dichtmembran 1 ist die Abdeckkappe 14 angeordnet, die eine kreisrunde Grundform aufweist (in den Darstellungen der Fig. 2 bis Fig. 4 perspektivisch bedingt nicht erkennbar). Im Querschnitt weist die Abdeckkappe 14 eine Hutform auf, mit einem durch die umlaufende Flanke 14a und dem Dach 14b gebildeten Kopfteil, einem umlaufenden Innenkrempenabschnitt 14c und einem den Innenkrempenabschnitt 14c umlaufenden Außenkrempenabschnitt 14d. Mit der umlaufenden Flanke 14a umgreift die Abdeckkappe 14 hierbei umfangsseitig die Reibzähne 4 der Dichtmembran 1 (in den Fig. 2 bis 4 sind der besseren Übersicht halber lediglich die beiden Reibzähne 4 exemplarisch beziffert). Hierbei ist die Dichtmembran 1 im Zentralbereich 3 mit den Stabilisierungszähnen (in den Darstellungen der Fig. 2 bis 4 ist der besseren Übersicht halber lediglich der Stabilisierungszahn 6 exemplarisch beziffert) formschlüssig gegenüber dem Dach 14b der Abdeckkappe 14 fixiert. Der Außenkrempenabschnitt 14d ist aus einem Zahnprofil mit Zwischenräumen gebildet, was in den Darstellungen der Fig. 2 bis 4 perspektivisch bedingt nicht erkennbar ist. Mit dem Außenkrempenabschnitt 14d ist die Abdeckkappe 14 gleichzeitig in einer um den Fluidauslass 12 verlaufenden zylindrischen Ausnehmung des Gehäuseteils 10 kraft- und formschlüssig fixiert, indem sie in diese eingepresst ist.

In Fig. 2 ist die Dichtmembran 1 in ihrer Ruhestellung dargestellt, in der der Fluidauslass 12 nicht beaufschlagt ist. Die Dichtmembran 1 liegt hierbei mit dem den Dichtabschnitt bildenden Randbereich 2 dichtend an der Innenseite des Innenkrempenabschnitts 14c der Abdeckkappe 14 an. Die Innenseite des Innenkrempenabschnitts 14c fungiert hierbei gleichzeitig als Dichtfläche und Dichtsitz für den Dichtabschnitt der Dichtmembran 1. Unterhalb des Randbereichs 2 der Dichtmembran 1 bildet die um den Fluidauslass 12 verlaufende zylindrische Ausnehmung des Gehäuseteils 10 einen Hohlraum 15.

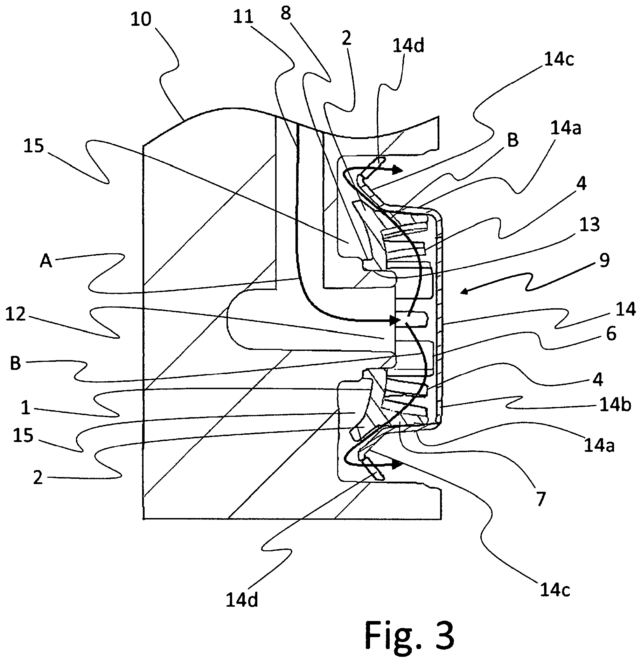

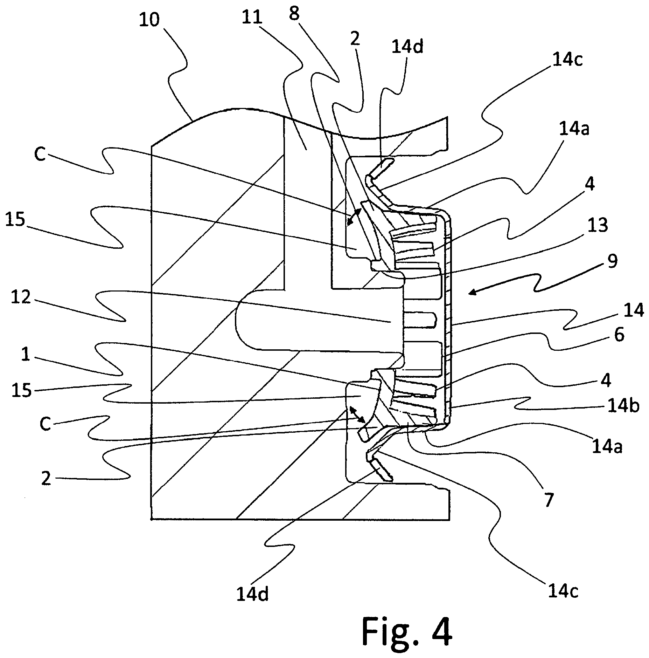

Die Fig. 3 und 4 zeigen die Dichtmembran 1 in ihrer Öffnungsstellung, die sie bei der Beaufschlagung des Fluidauslasses 12 mit einem ausreichenden Druck einnimmt. Der Strömungsweg des Fluids ist in Fig. 3 durch die Pfeile A und B dargestellt. Bei der Beaufschlagung des Fluidauslasses 12 wird die zentrale Durchflussöffnung 5 der Dichtmembran 1 vom Fluid durchströmt (Pfeil A) und die Fluidströmung auf der dem Fluidauslass 12 abgewandten Seite der Dichtmembran 1 durch die Abdeckkappe 14 auf den umlaufenden Randbereich 2 der Dichtmembran 1 umgelenkt (Pfeile B), der durchgängig als Dichtabschnitt ausgebildet ist. Hierbei passiert die Fluidströmung die Zwischenräume zwischen den Stabilisierungszähnen 6. Bei Anliegen eines ausreichenden Fluiddrucks wird die formelastische Rückstellkraft des den Dichtabschnitt bildenden Randbereichs 2 der Dichtmembran 1 überwunden, wodurch sich der Randbereich 2 von der Innenseite des Innenkrempenabschnitts 14c der Abdeckkappe 14 in einer Wölbungsbewegung abhebt, wobei er in den Hohlraum 15 eingreift und einen Durchflussquerschnitt für die Fluidströmung freigibt. Die Fluidströmung entweicht durch den freigegeben Durchflussquerschnitt, den Hohlraum 15 in die Atmosphäre, wobei sie die Zwischenräume des vom Außenkrempenabschnitt 14d gebildeten Zahnprofils passiert. Die Richtung der Wölbungsbewegung des den Dichtabschnitt bildenden Randbereichs 2 der Dichtmembran 1 ist Fig. 4 durch die Pfeile C dargestellt. Mit der Wölbung des Randbereichs 2 neigen sich gleichzeitig die Reibzähne 4 und legen sich hierbei mit ihren jeweils in Neigungsrichtung orientierten Kontaktflächen 7 an die eine Anlagefläche bildende Innenseite der umlaufenden Flanke 14a der Abdeckkappe 14 an und üben einen Reibschluss auf diese aus. Hierdurch wird die Lage des den Dichtabschnitt bildenden Randbereichs 2 der Dichtmembran 1 aufgrund der körperlichen Verbindung von Randbereich 2 und den Reibzähnen 4 in seiner Öffnungsstellung stabilisiert und ein unerwünschtes Schwingen, Oszillieren oder Flattern des Dichtabschnitts in der Öffnungsstellung verhindert oder zumindest so stark gedämpft, dass keine unerwünschten Störgeräusche emittiert werden.

Das Rückschlagventil 9 ist konstruktiv besonders einfach und kostengünstig herstellbar, da es zusätzlich zu dem Gehäuseteil 10 mit entsprechenden Bohrungen lediglich aus der Dichtmembran 1 und der Abdeckkappe 14 gebildet ist. Die Dichtmembran 1 ist hierbei einfach als Elastomerteil in einem ur- oder umformenden Fertigungsverfahren herstellbar. Die Abdeckkappe 14 kann einfach als Metallteil in einem Stanzverfahren oder als Kunststoffteil in einem Spritzgussverfahren hergestellt werden.

### Bezugszeichenliste

- 1: Dichtmembran
- 2: Randbereich
- 3: Zentralbereich
- 4: Reibzahn
- 5: Durchflussöffnung
- 6: Stabilisierungszahn
- 7: Kontaktfläche
- 8, 13: Hohlansatz
- 9: Rückschlagventil
- 10: Gehäuseteil
- 11: Fluidkanal
- 12: Fluidauslass
- 14: Abdeckkappe
- 14a: Flanke
- 14b: Dach
- 14c: Innenkrempenabschnitt
- 14d: Außenkrempenabschnitt
- 15: Hohlraum

## Patentansprüche

1. Dichtmembran (1), aufweisend einen Randbereich (2) und einen Zentralbereich (3), wobei der Randbereich (2) durchgängig als ein flächiger, biegeelastischer Dichtabschnitt ausgebildet ist, der mit einem Fluiddruck bieg- oder wölbbar ist,
wobei auf oder benachbart zu der Fläche des Dichtabschnitts mehrere formelastische Reibzähne (4) jeweils im gleichen Abstand zu einem Rand des Dichtabschnitts über den gesamten Dichtabschnitt hinweg und jeweils in einem Abstand zueinander derart ausgebildet oder angeordnet ist, wobei sie mit dem Dichtabschnitt einen Winkel zwischen 30° bis 150° bilden,
wobei die Reibzähne jeweils an ihrer in Neigungsrichtung orientierten Flanke eine Kontaktfläche (7) aufweisen,
**dadurch gekennzeichnet, dass**
die Reibzähne (4) sich gemeinsam mit der Biegungs- oder Wölbungsbewegung des flächigen Dichtabschnitts neigen, und dass
die Dichtmembran (1) einteilig ausgeführt ist.

2. Dichtmembran (1) nach Anspruch 1, **dadurch gekennzeichnet, dass** die Reibzähne (4) jeweils in einem gleichen oder variierenden Abstand zueinander ausgebildet oder angeordnet sind.

3. Dichtmembran (1) nach Anspruch 1 oder 2, **dadurch gekennzeichnet, dass** diese eine kreisrunde Grundfläche aufweist und die Reibzähne ringförmig ausgebildet oder angeordnet sind.

4. Dichtmembran nach Anspruch 3, **dadurch gekennzeichnet, dass** im Zentralbereich (3) mindestens eine Durchflussöffnung (5) ausgebildet und um diese verlaufend eine Einspann- oder Flanschfläche oder ein Hohlansatz (8) gebildet ist.

5. Dichtmembran nach einem der Ansprüche 1 bis 4, **dadurch gekennzeichnet, dass** sie aus einem Elastomer gebildet ist.

6. Rückschlagventil (9) für fluidtechnische Auslassöffnungen, umfassend einen Gehäuseteil (10) mit einem Fluidauslass (12), **dadurch gekennzeichnet, dass** in einem Strömungsweg des Fluidauslasses (12) eine Dichtmembran (1) nach einem der Ansprüche 1 bis 5 angeordnet ist, wobei der Dichtabschnitt den Strömungsweg in einer unbeaufschlagten Ruhestellung verschließt und in einer mit einem Fluiddruck beaufschlagten Biegungs- oder Wölbungsstellung freigibt und wobei in der Biegungs- oder Wölbungsstellung des Dichtabschnitts die Kontaktflächen (7) der Reibzähne (4) in Kontakt mit einer korrespondierenden Anlagefläche stehen.

7. Rückschlagventil (9) nach Anspruch 6 mit einer Dichtmembran (1) nach einem der Anspruch 4 oder nach den Ansprüchen 4 und 5, welche mit einer zentralen Durchflussöffnung (5) ausgebildet ist, um die herum ein Hohlansatz (8) gebildet ist, **dadurch gekennzeichnet, dass** der Fluidauslass (12) mit einem korrespondierenden Hohlansatz (13) ausgebildet ist und die Dichtmembran (1) auf diesen aufsteckbar oder in diesen einsteckbar ist, und eine kreisrunde, im Querschnitt hutförmige Abdeckkappe (14) auf der dem Fluidauslass (12) abgewandten Seite der Dichtmembran (1) fixierbar ist, wobei eine umlaufende Flanke (14a) eines Kopfteils der Abdeckkappe (14) die ringförmig ausgebildeten oder angeordneten Reibzähne (4) umfangsseitig umgreift und ein umlaufender Innenkrempenabschnitt (14c) der Abdeckkappe (14) einen Dichtsitz mit einer Dichtfläche bildet, indem er gegenüber der Ebene des Dichtabschnitts in Richtung des Gehäuses geneigt ausgebildet ist, so dass der randseitige Dichtabschnitt in einer leichten Biegungs- oder Wölbungsstellung unter Vorspannung am Innenkrempenabschnitt (14c) bündig anliegt, und wobei die Abdeckkappe (14) einen weiteren, den Innenkrempenabschnitt (14c) umlaufenden Außenkrempenabschnitt (14d) bildet, der aus einem Zahnprofil gebildet oder als durchgängiger Bund mit Durchgangsöffnungen ausgestaltet ist und mit dem die Abdeckkappe (14) am oder im Gehäuse fixierbar ist, und wobei unterhalb des randseitigen Dichtabschnitts ein Hohlraum (15) gebildet ist, in den dieser unter Fluiddruck in einer Biegungs- oder Wölbungsbewegung eingreifen kann, wobei sich die Reibzähne (4) neigen und mit ihrer Kontaktfläche (7) an die die Anlagefläche bildende Innenseite der umlaufenden Flanke (14a) des Kopfteils der Abdeckkappe (14) anlegen.

8. Rückschlagventil (9) nach Anspruch 7, **dadurch gekennzeichnet, dass** die Dichtmembran (1) im Zentralbereich (3) mehrere ringförmig um den Hohlansatz (8) herum ausgebildete oder angeordnete Stabilisierungszähne (6) aufweist.

## Claims

1. Sealing diaphragm (1), comprising an edge region (2) and a central region (3), the edge region (2) being formed continuously as a flat, flexible sealing section which can be bent or curved with a fluid pressure, a plurality of dimensionally elastic friction teeth (4) being formed or arranged, on or adjacent to the surface of the sealing section, over the entire sealing section each at the same distance from an edge of the sealing section and in each case at a distance from one another, said friction teeth forming an angle between 30° to 150° with the sealing section, the friction teeth each having a contact surface (7) on the flank thereof oriented in the inclination direction,
**characterized in that**
the friction teeth (4) are inclined together with the bending or curving movement of the flat sealing section, and **in that**
the sealing diaphragm (1) is designed in one piece.

2. Sealing diaphragm (1) according to claim 1, **characterized in that** the friction teeth (4) are each formed or arranged at the same or a varying distance from one another.

3. Sealing diaphragm (1) according to either claim 1 or claim 2, **characterized in that** said sealing diaphragm (1) has a circular base surface and the friction teeth are designed or arranged so as to be annular.

4. Sealing diaphragm (1) according to claim 3, **characterized in that** at least one flow opening (5) is formed in the central region (3) and a clamping or flange surface or a hollow attachment (8) is formed extending around said opening.

5. Sealing diaphragm (1) according to any of claims 1 to 4,
**characterized in that** it is formed from an elastomer.

6. Check valve (9) for fluidic outlet openings, comprising a housing part (10) with a fluid outlet (12), **characterized in that** a sealing diaphragm (1) according to any of claims 1 to 5 is arranged in a flow path of the fluid outlet (12), the sealing section closing the flow path in an unloaded rest position and releasing it in a bending or curving position to which a fluid pressure is applied, and the contact surfaces (7) of the friction teeth (4) being in contact with a corresponding contact surface in the bending or curving position of the sealing section.

7. Check valve (9) according to claim 6 comprising a sealing diaphragm (1) according to any of claim 4 or according to claims 4 and 5, which is formed with a central flow opening (5) around which a hollow attachment (8) is formed, **characterized in that** the fluid outlet (12) is formed with a corresponding hollow attachment (13) and the sealing diaphragm (1) can be plugged thereon or inserted therein, and a circular cap (14), hat-shaped in cross section, can be fixed on the side of the sealing diaphragm (1) facing away from the fluid outlet (12), a circumferential flank (14a) of a head part of the cap (14) surrounding the friction teeth (4) formed or arranged so as to be annular around the circumference and a circumferential inner brim section (14c) of the cover cap (14) forms a sealing seat having a sealing surface, by said section being inclined with respect to the plane in the direction of the housing, such that the edge-side sealing section rests flush against the inner brim section (14c) in a slight bending or curving position under preload, and the cap (14) forming a further outer brim section (14d) which surrounds the inner brim section (14c) and is formed from a toothed profile or is designed as a continuous collar with through-openings and by means of which the cap (14) can be fixed on or in the housing, and a cavity (15) being formed below the edge-side sealing section, in which cavity said section can engage under fluid pressure in a bending or curving position, the friction teeth (4) being inclined and resting, with the contact surface (7) thereof, on the inner face, forming the contact surface, of the circumferential flank (14a) of the head part of the cap (14).

8. Check valve (9) according to claim 7, **characterized in that** the sealing diaphragm (1) has a plurality of stabilizing teeth (6) formed or arranged annularly around the hollow attachment (8) in the central region (3).

## Revendications

1. Membrane d'étanchéité (1), présentant une zone de bord (2) et une zone centrale (3), dans laquelle la zone de bord (2) est formée en continu comme une section d'étanchéité plane élastique en flexion, qui peut être pliée ou cintrée avec une pression de fluide, dans laquelle sur ou à côté de la surface de la section d'étanchéité, plusieurs dents de friction (4) à forme élastique sont formées ou agencées respectivement à une même distance d'un bord de la section d'étanchéité sur l'ensemble de la section d'étanchéité et respectivement à une distance les unes des autres, dans laquelle lesdites dents de friction forment avec la section d'étanchéité un angle entre 30° et 150°, dans laquelle les dents de friction présentent respectivement sur leur extrémité orientée dans la direction d'inclinaison une surface de contact (7),
**caractérisée en ce que**
les dents de friction (4) s'inclinent conjointement avec le mouvement de pliage ou de cintrage de la section d'étanchéité plane et **en ce que**
la membrane d'étanchéité (1) est réalisée d'une seule pièce.

2. Membrane d'étanchéité (1) selon la revendication 1, **caractérisée en ce que** les dents de friction (4) sont formées ou agencées respectivement à une distance identique ou variable les unes des autres.

3. Membrane d'étanchéité (1) selon la revendication 1 ou 2,
**caractérisée en ce que** celle-ci présente une surface de base circulaire et les dents de friction sont formées ou agencées en forme d'anneau.

4. Membrane d'étanchéité selon la revendication 3, **caractérisée en ce que** dans la zone centrale (3) au moins une ouverture d'écoulement (5) est formée et s'étendant autour de celle-ci une surface de serrage ou de bride ou une extension creuse (8) est formée.

5. Membrane d'étanchéité selon l'une quelconque des revendications 1 à 4, **caractérisée en ce qu'**elle est formée en un élastomère.

6. Soupape de retenue (9) pour orifices de sortie fluidiques, comprenant une partie de boîtier (10) comprenant une sortie de fluide (12), **caractérisée en ce que** dans une voie d'écoulement de la sortie de fluide (12) une membrane d'étanchéité (1) selon l'une quelconque des revendications 1 à 5 est agencée, dans laquelle la section d'étanchéité ferme la voie d'écoulement dans une position de repos non servie et la libère dans une position de pliage ou de cintrage soumise à une pression de fluide et dans laquelle dans la position de pliage ou de cintrage de la section d'étanchéité les surfaces de contact (7) des dents de friction (4) sont en contact avec une surface de placement correspondante.

7. Soupape de retenue (9) selon la revendication 6 avec une membrane d'étanchéité (1) selon l'une de la revendication 4 ou selon les revendications 4 et 5, qui est formée avec une ouverture d'écoulement (5) centrale, autour de laquelle est formée une extension creuse (8), **caractérisée en ce que** la sortie de fluide (12) est formée avec une extension creuse (13) correspondante et la membrane d'étanchéité (1) peut s'emboîter sur celle-ci ou être insérée dans celle-ci et un couvercle de protection (14) circulaire à section transversale en forme de chapeau peut être fixé sur le côté de la membrane d'étanchéité (1) à l'opposé de la sortie de fluide (12), dans laquelle un flanc périphérique (14a) d'une partie de tête du couvercle de protection (14) entoure côté périphérique les dents de friction (4) formées ou agencées en forme d'anneau et une section de bordure interne périphérique (14c) du couvercle de protection (14) forme un siège d'étanchéité avec une surface d'étanchéité, **en ce qu'**elle est formée inclinée par rapport au plan de la section d'étanchéité en direction du boîtier, de sorte que la section d'étanchéité côté bord affleure la section de bord interne (14c) sous précontrainte dans une position de pliage ou de cintrage léger et dans laquelle le couvercle de protection (14) forme une autre section de bord externe (14d) entourant la section de bord interne (14c), qui est formée à partir d'un profil de dent ou est réalisée sous forme de ceinture continue avec des ouvertures de passage avec laquelle le couvercle de protection (14) peut être fixé sur ou dans le boîtier et dans laquelle, en dessous de la section d'étanchéité côté bord, un espace creux (15) est formé dans lequel celui-ci peut être introduit sous pression de fluide dans un mouvement de pliage ou de cintrage, dans laquelle les dents de friction (4) s'inclinent et reposent avec leur surface de contact (7) sur le côté interne formant la surface de placement du flanc périphérique (14a) de la partie de tête du couvercle de protection (14).

8. Soupape de retenue (9) selon la revendication 7, **caractérisée en ce que** la membrane d'étanchéité (1) présente, dans la zone centrale (3), plusieurs dents de stabilisation (6) annulaires formées ou agencées autour de l'extension creuse (8).
